# EUROPÄISCHE PATENTSCHRIFT

(11) **EP 1 724 159 B1**
(45) Veröffentlichungstag und Bekanntmachung des Hinweises auf die Patenterteilung: **18.07.2012**
(21) Anmeldenummer: 06113914.3
(22) Anmeldetag: 15.05.2006
(51) Int. Cl.: B60R 21/21, B60R 21/2165

(54) **Sicherheitseinrichtung**
Safety device
Dispositif de sécurité

(30) Priorität: 20.05.2005 DE 102005024268
(43) Veröffentlichungstag der Anmeldung: 22.11.2006
(73) Patentinhaber: Boshoku Automotive Europe GmbH, 82538 Geretsried (DE)
(72) Erfinder: Herzog, Heiko, 82515, Wolfratshausen (DE); Knall, Johannes, 82538, Geretsried (DE); Dyckerhoff, Dirk, 82402, Seeshaupt (DE); Riesinger, Stefan, 81476, München (DE)
(74) Vertreter: von Kreisler Selting Werner

(56) Entgegenhaltungen:
- DE-A1- 10 315 622
- DE-A1- 19 811 181
- US-A- 5 431 435

## Beschreibung

Gegenstand der vorliegenden Erfindung ist eine Sicherheitseinrichtung in der Brüstung einer Seitentür eines Fahrzeuges für den Schutz des Kopfes der Insassen vor Seitenaufprall, insbesondere ein Kopf-Airbag.

DE 199 17 876 A1 beschreibt eine Vorrichtung, die eine Rahmenstruktur aufweist, die eine Einsatzöffnung definiert und ferner mit einer aufblasbaren Insassenschutzvorrichtung ausgerichtet mit der Einsatzöffnung und zudem mit einer Einsatzstruktur, die sich über die Einsatzöffnung erstreckt. Die Einsatzstruktur besitzt erste und zweite Verriegelungsteile und in lösbarem Verriegelungseingriff mit der Rahmenstruktur an Stellen beabstandet über die Einsatzöffnung hinweg. Die Einsatzstruktur ist derart konfiguriert, dass sie eine nicht zerbrechende Auslenkung erfährt und zwar unter dem Einfluss von Aufblassströmungsmitteldruckkräften angelegt durch die Schutzvorrichtung. Diese nicht zerbrechende Auslenkung der Einsatzstruktur bewegt den ersten Verriegelungsteil partiell aus dem Verriegelungseingriff mit der Rahmenstruktur und bewegt den zweiten Verriegelungsteil vollständig aus dem Verriegelungseingriff mit der Rahmenstruktur heraus.

Ein ähnliches Prinzip einer Sicherheitseinrichtung in einer Seitenverkleidung eines Fahrzeugs wird in der DE 103 15 622 A1 gemäß dem Oberbegriff des Anspruchs 1 beschrieben. Diese Sicherheitseinrichtungen im Fahrzeug sollen nicht nur Frontalzusammenstöße so weit dämpfen oder kompensieren, dass größere Verletzungen der Passagiere ausgeschlossen werden können, sondern auch bei einem Seitenaufprall Schutz bieten. Zu der Lösung dieses Problems wurden Sicherheitseinreichungen geschaffen, welche einen oder mehrere Gassäcke aus dem Dachbereich eines Fahrzeugs entfalten. Wenn allerdings dieser Dachbereich fehlt, wie bei halboffenen Fahrzeugen vom Typ Cabriolet, muss diesem Sicherheitsbedürfnis Rechnung getragen werden, indem man Gassäcke in den Bereich der Türseitenverkleidung integriert. Das Öffnungsverhalten eines derartigen Gassacks erfolgt spiegelgleich zu den bekannten vorhangartigen Gassäcken. Durch die Verwendung eines zwischen Türinnenblech und Türseitenverkleidung angeordneten Airbagmoduls, welcher unter mindestens einer Verschwächungsstruktur in einem oberen Bereich der Türseitenverkleidung angeordnet ist und aufgrund eines den Airbag auslösenden Seitenaufpralls ein Versagen der Türseitenverkleidung entlang dieser Verschwächungsstruktur und einen Austritt des Airbags in den Fahrzuginnenraum zur Folge hat. Der Airbag nimmt dabei eine Position zwischen der Seitenscheibe und dem Kopf des Passagiers ein. Die Seitenscheibe ist für die Führung des sich entfaltenden Airbags nicht erforderlich. Der Airbag selbst kann eine Serie von Nähten aufweisen, welche die Auslöserichtung nachträglich beeinflussen. Diese Auslenkung der Brüstung bei Auslösung des Airbags erfordert einen Knickpunkt oder eine Knicklinie im Wesentlichen parallel zum Verlauf der Brüstung. Die Verschwächungsstruktur führt zu einer Schwächung der Belastbarkeit der Brüstung.

DE 198 11 181 A1 beschreibt eine Anordnung eines Gasgenerators für eine Seitenairbageinrichtung, die sich zwischen einer Seitentür und/oder Seitenwand und dem Kopf-, Schulter- und Armbereich entfalten kann.

DE 195 05 214 C2 beschreibt ein Innenverkleidungsteil für eine Seitentür eines Personenkraftwagens. Der Airbag entfalted sich im Brustbereich des Fahrers.

DE 298 23 048 U1 beschreibt eine Schutzvorrichtung für die Insassen von Fahrzeugen, die sich ebenfalls im Brustbereich des Fahrers entfaltet.

Dem gemäß besteht die Aufgabe der vorliegenden Erfindung darin, ein verbessertes Konzept für eine Sicherheitseinrichtung in der Brüstung einer Seitentür eines Fahrzeugs für den Schutz des Kopfes der Insassen vor Seitenaufprall (Kopfairbag), insbesondere für Fahrzeuge von Typ Cabriolet zur Verfügung zu stellen, bei denen insbesondere der Verriegelungsstift beibehalten werden kann und auf einen Verschwächungsbereich verzichtet werden kann.

Darüber hinaus ist es erforderlich, eine Türinnenverkleidung auch ohne sichtbare Oberflächenschwächung bereitzustellen, bei der also die Gassackaustrittsöffnung im normalen Gebrauch unsichtbar ist. Nach aktuellem Stand der Technik ist auch die Vermeidung von Partikelflug bei Auslösung der Gassackeinrichtung von hoher Priorität. Ein entsprechendes System muss alltagstauglich sein, das heißt Sonnensimulation und Kaltwärmetests unproblematisch überstehen, aber auch mechanische Belastungen wie beispielsweise Krafteinwirkung durch das Auflegen des Insassen-Unterarms auf den Brüstungsbereich ohne sichtbare Verformung oder Beschädigungen ertragen können.

Die vorstehend genannten Aufgaben werden erfindungsgemäß gelöst durch eine Sicherheitseinrichtung in der Brüstung einer Seitentür eines Fahrzeuges für den Schutz des Kopfes der Insassen vor Seitenaufprall, wobei wenigstens eine Gassackeinrichtung unsichtbar hinter einer Türinnenverkleidung (1) angeordnet ist, wobei wenigstens ein Bereich der Türinnenverkleidung (1) als Abdeckung (2) für den Gassack (3) ausgeführt ist, dadurch gekennzeichnet, dass die Abdeckung (2) von mindestens einem Dehnungsbereich (4) begrenzt wird und im Bereich des Gassacks (3) in Y-Richtung des Fahrzeugs ellipsenförmig dehnbar angeordnet ist.

Die erfindungsgemäße Sicherheitseinrichtung (Kopfairbag) erfordert somit keinen Knickpunkt oder kein Drehgelenk in der Türinnenverkleidung und beinhaltet somit eine erhöhte Gestaltungsfreiheit für das Design der Türinnenverkleidung. Auch kann auf einen Verschwächungsbereich und oft erforderliche Halte-Elemente oder Fangbänder verzichtet werden.

Bei Auslösung der Gassackeinrichtung dehnt sich der begrenzte Dehnungsbereich 4 in Y-Richtung des Fahrzeugs und schafft einen Öffnungsbereich für den Gassack parallel zur Seitenscheibe der Seitentür. Dabei öffnet sich ein ellipsenförmiger Spalt allein im Bereich der Abdeckung 2, so dass der in vielen Fahrzeugen vorhandene Verriegelungsstift 11 in üblicher Weise beibehalten werden kann.

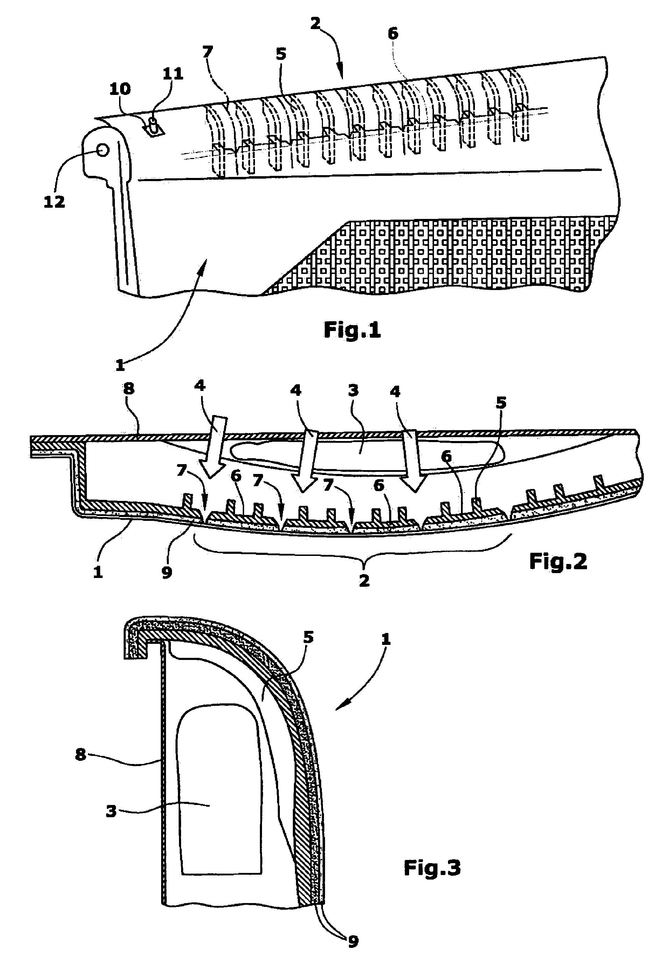

Fig**.** 1 stellt eine Draufsicht auf die erfindungsgemäße Sicherheitseinrichtung dar, wobei die Türinnenverkleidung 1 im Bereich der Abdeckung 2 für den Gassack 3 einen Dehnungsbereich 4 in Y-Richtung des Fahrzeugs aufweist. Auch die Öffnung 10 für den Verriegelungsstift 11 ist erkennbar. Die parallelen Verstärkungsrippen 5 sind in der Fig. 1 als Ausbuchtung der Querlamelle 6 dargestellt, verlaufen somit parallel der gestrichelten Dehnungslinien bis zum Türinnenblech 8 (hier nicht dargestellt) in Z-Richtung des Fahrzeugs und geben der Brüstung die gewünschte Steifigkeit.

Die in der Fig. 1 dargestellte Querlamelle 6 die Bestandteil des Trägers ist, weist eine Vielzahl von Sollbruchstellen 7 auf, die eine Dehnung des Materials der Dekorschicht 9 der Türinnenverkleidung 1 bei Auslösen der nicht dargestellten Gassackeinrichtung erlauben. In der Fig. 1 ist dargestellt, dass die Querlamelle 6 jeweils zwei Verstärkungsrippen 5 integral miteinander verbindet. Die Querlamelle 6 erstreckt sich über den Bereich der Abdeckung 2 in X-Richtung des Fahrzeuges. Eine Mehrzahl von Querlamellen 6, die beispielsweise parallel übereinander angeordnet sind, sorgen dabei für eine hohe Stabilität des gesamten Aufbaus.

Die Sollbruchstellen können alternativ auch durch Laser-Schwächung sowie durch mechanische Fräs- oder Messer-Schnitt-Verfahren eingebracht werden.

In der Fig. 2 ist dargestellt, dass sowohl die Verstärkungsrippen 5 als auch die Querlamelle 6 integraler Bestandteil der Trägerschicht der Türinnenverkleidung 1 darstellen. Die hier dargestellte Türinnenverkleidung 1 umfasst weiterhin eine gegebenenfalls hinterschäumte Dekorschicht 9, die als integralen Bestandteil die Abdeckung 2 für die Gassackeinrichtung (nicht dargestellt) aufweist. In der Fig. 2 ist durch die elliptische Linie und die Pfeile die Öffnung für den Gassack 3 dargestellt.

Als Material für die gegebenenfalls hinterschäumte Dekorschicht 9 bieten sich handelsübliche Kunststoffmaterialien, beispielsweise auf der Basis von ABS/PC, PVC, PUR oder thermoplastischem Polyolefin, aber auch Leder an. Der gegebenenfalls vorhandene Schaumrücken enthält vorzugsweise PP, PE, PP/PE oder PUR.

Die angeformten Verstärkungsrippen 5 sorgen für eine ausreichende Steifigkeit der Brüstung in Z-Richtung des Fahrzeuges und vermeiden das Einklemmen des Gassacks 3 an der Bordkante bei Auslösung durch die Gassackeinrichtung.

Ein besonderer Vorteil des erfindungsgemäßen Konzeptes besteht in der Werkzeug-fallenden Trägerschwächung. Die Gassackeinrichtung kann am Türinnenblech 8 befestigt werden, wobei es vorteilhaft ist, den Generator nach Möglichkeit mittig unter dem Modul zu befestigen.

Die Vorteile des erfindungsgemäßen Konzeptes können dahingehend zusammengefasst werden, dass der Verriegelungsstift 11 beibehalten werden kann und Schraubpunkte 12 im Bereich der Türstiftrosette 10 ebenso im Bereich der Türöffner möglich sind. Erfindungsgemäß ist keine Oberflächenschwächung der Dekorschicht 9 der Türinnenverkleidung 1 erforderlich, woraus sich ein einfacher und günstiger Herstellprozess ergibt. Eine Dokumentation der Schwächung der Querlamellen 6 ist nicht erforderlich. Die Gassackaustrittsöffnung ist unsichtbar. Beim Auslösen der Gassackeinrichtung entsteht kein Partikelflug durch umherfliegende Teile der Abdeckung 2, es sind keine zusätzlichen Halte-Elemente oder Fangbänder erforderlich.

Das System ermöglicht eine Vielzahl von Variationsmöglichkeiten über Länge, Anzahl und Tiefe der Kombination aus Schwächung der Querlamellen 6 in Kombination mit den Verstärkungsrippen 5.

## Patentansprüche

1. Sicherheitseinrichtung in der Brüstung einer Seitentür eines Fahrzeuges für den Schutz des Kopfes der Insassen vor Seitenaufprall, wobei wenigstens eine Gassackeinrichtung unsichtbar hinter einer Türinnenverkleidung (1) angeordnet ist, wobei wenigstens ein Bereich der Türinnenverkleidung (1) als Abdeckung (2) für den Gassack (3) ausgeführt ist und die Abdeckung (2) von mindestens einem Dehnungsbereich (4) begrenzt wird und im Bereich des Gassacks (3) in Y-Richtung des Fahrzeugs ellipsenförmig dehnbar angeordnet ist, **dadurch gekennzeichnet, dass** die Abdeckung (2) eine Vielzahl von Verstärkungsrippen (5) in Z-Richtung des Fahrzeuges aufweist, die in X-Richtung des Fahrzeugs mit wenigstens einer Querlamelle (6) verbunden sind.

2. Sicherheitseinrichtung nach Anspruch 1, **dadurch gekennzeichnet, dass** die Verstärkungsrippen (5) und/oder die Querlamellen (6) Bestandteil einer Trägerschicht der Türinnenverkleidung (1) sind.

3. Sicherheitseinrichtung nach Anspruch 1 oder 2, **dadurch gekennzeichnet, dass** wenigstens eine oder mehrere Querlamellen (6) in X-Richtung des Fahrzeuges zwei oder mehrere Verstärkungsrippen (5) miteinander verbinden.

4. Sicherheitseinrichtung nach Anspruch 1 oder 2, **dadurch gekennzeichnet, dass** sich die Querlamelle (6) oder eine Mehrzahl von Querlamellen (6) über den Bereich der Abdeckung (2) in X-Richtung des Fahrzeuges erstreckt oder erstrecken und zwischen einzelnen oder mehreren Verstärkungsrippen (5) Sollbruchstellen (7) aufweist oder aufweisen.

5. Sicherheitseinrichtung nach einem der Ansprüche 1 bis 4, **dadurch gekennzeichnet, dass** die Gassackeinrichtung am Türinnenblech (8) befestigt ist.

6. Sicherheitseinrichtung nach einem der Ansprüche 1 bis 5, **dadurch gekennzeichnet, dass** die Türinnenverkleidung (1) eine gegebenenfalls hinterschäumte Dekorschicht (9) aufweist, die als integralen Bestandteil die Abdeckung (2) für die Gassackeinrichtung aufweist.

7. Sicherheitseinrichtung nach einem der Ansprüche 1 bis 5, **dadurch gekennzeichnet, dass** die Türinnenverkleidung (1) eine Dekorschicht auf Basis eines Folien/Schaum-Laminates, insbesondere aus PUR, PVC oder TPO, wobei der gegebenenfalls vorhandene Schaumrücken PP, PE, PP/PE oder PUR enthält, aufweist.

## Claims

1. A safety device in the window sill of a side door of a vehicle for protecting the head of the occupants from lateral impact, wherein at least one airbag device is concealed behind a door interior trim (1), wherein at least one region of the door interior trim (1) is designed as a cover (2) for the airbag (3), and the cover (2) is bounded by at least one expansion zone (4) and is arranged in the region of the airbag (3) to be expandable in ellipse shape in the Y direction of the vehicle, **characterized in that** said cover (2) has a plurality of reinforcing ribs (5) in the Z direction of the vehicle that are connected with at least one cross strip (6) in the X direction of the vehicle.

2. The safety device according to claim 1, **characterized in that** said reinforcing ribs (5) and/or said cross strips (6) are part of a support layer of said door interior trim (1).

3. The safety device according to claim 1 or 2, **characterized in that** at least one or more cross strips (6) connect two or more reinforcing ribs (5) in the X direction of the vehicle.

4. The safety device according to claim 1 or 2, **characterized in that** said cross strip (6) or a plurality of cross strips (6) extends or extend over the region of said cover (2) in the X direction of the vehicle and has or have predetermined breaking points between individual or several reinforcing ribs (5).

5. The safety device according to any of claims 1 to 4, **characterized in that** said airbag device is fastened to the door interior panel (8).

6. The safety device according to any of claims 1 to 5, **characterized in that** said door interior trim (1) has an optionally foam-backed decorative layer (9) that includes said cover (2) for said airbag device as an integral part thereof.

7. The safety device according to any of claims 1 to 5, **characterized in that** said door interior trim (1) has a decorative layer based on a sheet/foam laminate, especially of PUR, PVC or TPO, wherein the optionally present foam back contains PP, PE, PP/PE or PUR.

## Revendications

1. Dispositif de sécurité dans le rebord de fenêtre d'une portière latérale d'un véhicule pour protéger la tête des occupants contre les chocs latéraux, dans lequel au moins un dispositif de coussin gonflable est caché derrière une garniture intérieure de portière (1), dans lequel au moins une région de la garniture intérieure de portière (1) est conçue comme couverture (2) pour le coussin gonflable (3), et la couverture (2) est délimitée par au moins une zone d'expansion (4) et est prévue dans la région du coussin gonflable (3) pour être extensible en forme d'ellipse dans la direction Y du véhicule, **caractérisé en ce que** la couverture (2) comprend une pluralité de nervures de renfort (5) dans la direction Z du véhicule, qui sont reliées avec au moins une barrette transversale (6) dans la direction X du véhicule.

2. Dispositif de sécurité selon la revendication 1, **caractérisé en ce que** lesdites nervures de renfort (5) et/ou lesdites barrettes transversales (6) font partie d'une couche de soutien de la garniture intérieure de portière (1).

3. Dispositif de sécurité selon la revendication 1 ou 2, **caractérisé en ce qu'**au moins une ou plusieurs des barrettes transversales (6) relient deux ou plusieurs nervures de renfort (5) dans la direction X du véhicule.

4. Dispositif de sécurité selon la revendication 1 ou 2, **caractérisé en ce que** la barrette transversale (6) ou une pluralité de barrettes transversales (6) s'étend ou s'étendent sur la région de la couverture (2) dans la direction X du véhicule et comprend ou comprennent des points de rupture (7) entre des nervures de renfort (5) singuliers ou entre plusieurs nervures de renfort (5).

5. Dispositif de sécurité selon l'une quelconque des revendications 1 à 4, **caractérisé en ce que** le dispositif de coussin gonflable est attaché au panneau intérieur de la portière (8).

6. Dispositif de sécurité selon l'une quelconque des revendications 1 à 5, **caractérisé en ce que** ladite garniture intérieure de portière (1) comprend une couche de décoration (9) éventuellement doublée de mousse, qui comprend la couverture (2) pour le dispositif de coussin gonflable en tant que partie intégrante.

7. Dispositif de sécurité selon l'une quelconque des revendications 1 à 5, **caractérisé en ce que** ladite garniture intérieure de portière (1) comprend une couche de décoration à base d'un stratifié feuille/mousse, notamment de PUR, PVC ou TPO, dans lequel le doublage en mousse éventuellement présent contient du PP, PE, PP/PE ou PUR.
